# EUROPÄISCHE PATENTSCHRIFT

(11) **EP 4 090 542 B1**
(45) Veröffentlichungstag und Bekanntmachung des Hinweises auf die Patenterteilung: **28.05.2025**
(21) Anmeldenummer: 20808404.6
(22) Anmeldetag: 18.11.2020
(51) Int. Cl.: B60B 3/06, B60B 3/02, B60B 19/10, B60B 3/10

(54) **VERFAHREN ZUM HERSTELLEN EINER KRAFTWAGENFELGE AUS ALUMINIUM ODER EINER ALUMINIUMLEGIERUNG FÜR EIN RAD EINES KRAFTFAHRZEUGS SOWIE ENTSPRECHENDE KRAFTWAGENFELGE**
METHOD FOR PRODUCING A MOTOR VEHICLE RIM MADE OF ALUMINUM OR AN ALUMINUM ALLOY FOR A WHEEL OF A MOTOR VEHICLE AND CORRESPONDING MOTOR VEHICLE RIM
PROCÉDÉ DE PRODUCTION D'UNE JANTE DE VÉHICULE AUTOMOBILE EN ALUMINIUM OU EN ALLIAGE D'ALUMINIUM POUR UNE ROUE D'UN VÉHICULE AUTOMOBILE ET JANTE DE VÉHICULE AUTOMOBILE CORRESPONDANTE

(30) Priorität: 14.01.2020 DE 102020100693
(43) Veröffentlichungstag der Anmeldung: 23.11.2022
(73) Patentinhaber: Audi AG, 85045 Ingolstadt (DE)
(72) Erfinder: REILING, Jaan Mattes, 48336 Sassenberg (DE); GAUGLER, Jan, 74855 Neckarmühlbach (DE); HUMMEL, Marc, 74363 Güglingen (DE)
(86) Internationale Anmeldenummer: PCT/EP2020/082531
(87) Internationale Veröffentlichungsnummer: WO 2021/144052

(56) Entgegenhaltungen:
- EP-A1- 3 650 243
- DE-A1- 102013 002 632
- DE-B4- 102013 002 632
- GB-A- 2 202 196
- GB-A- 2 249 063
- US-A1- 2014 191 565
- US-A1- 2016 361 946
- US-B2- 8 651 584

## Beschreibung

Die Erfindung betrifft ein Verfahren zum Herstellen einer Kraftwagenfelge aus Aluminium oder einer Aluminiumlegierung für ein Rad eines Kraftfahrzeugs, wobei die Kraftwagenfelge ein auf gegenüberliegenden Seiten von einem Außenhorn und einem Innenhorn begrenztes Felgenbett, eine Nabe mit einer Mittenausnehmung und einem Lochkreis sowie eine das Felgenbett und die Nabe miteinander verbindende, insbesondere im Längsschnitt außermittig an dem Felgenbett angreifende, Felgenmitte aufweist. Die Erfindung betrifft weiterhin eine Kraftwagenfelge.

Aus dem Stand der Technik ist beispielsweise die Druckschrift EP 0 301 472 B1 bekannt. Diese beschreibt ein Herstellverfahren für Leichtmetallguss-Räder für Personenkraftwagen, wobei eine nah-eutektische veredelte AISi-Legierung verwendet wird, die - neben Al - Gewichtsanteile von 9,5 % bis 12,5 % Silizium und Legierungsbestandteile wie maximal 0,2 % Eisen, maximal 0,05 % Mangan, maximal 0,1 % Titan, maximal 0,03 % Kupfer, maximal 0,05 % Zink sowie je höchstens 0,05 % und in der Summe höchstens 0,15 % sonstige Verunreinigungen enthält, und wobei die Räder nach dem Erstarren aus der Gießform entnommen und abgekühlt werden. Dabei ist vorgesehen, dass die Legierung mindestens 0,05 bis höchstens 0,15 % Gewichtsanteile Magnesium enthält und dass die Räder von einer Temperatur - gemessen an deren Oberfläche - von mindestens 380 °C an Innenbereichen beziehungsweise Bereichen mit Massenkonzentrationen, wie Nabe und Schüssel von Rädern, unmittelbar beim Entnehmen aus der Gussform in Wasser abgeschreckt werden.

Weiterhin beschreibt die Druckschrift DE 20 2014 100 377 U1 ein Fahrzeugrad mit einem Radkörper und einer Mehrzahl von Felgenblättern, die mit zumindest einer Seitenoberfläche des Radkörpers gekoppelt ist, wobei jedes der Felgenblätter einen Luftstromführungsabschnitt und einen Luftstromhilfsabschnitt aufweist, wobei der Luftstromführungsabschnitt und der Luftstromhilfsabschnitt in einer vorderen und hinteren Seite auf dem Felgenblatt angeordnet sind.

Die Druckschrift DE 40 27 355 C2 zeigt zudem einen Doppelscheibenaufbau für Kraftfahrzeugräder aus Leichtmetalllegierung, umfassend: eine erste und zweite Radscheibe, die separat voneinander ausgebildet und an ihren Naben mittels einer Mehrzahl von ersten Schraubenklemmeneinrichtungen sowie an ihren Umfangsrändern mittels einer Mehrzahl von zweiten Schraubenklemmeneinrichtungen lösbar aneinander befestigt und als eine einheitliche Doppelradscheibe zusammen mit der daran vorgesehenen Radfelge drehbar sind; und Lüftungslöcher, die in den einander entsprechenden Zwischenbereichen zwischen der Nabe und dem Umfangsrand der beiden Radscheiben ausgebildet sind, wobei sich die Lüftungslöcher der zweiten Radscheibe in der Größe, Form und Verteilung von den Lüftungslöchern der ersten Radscheibe unterscheiden, und wobei die Zwischenbereiche und die Radachse im Querschnitt eine dreieckige Konfiguration bilden. Aus US 8 651 584 B2 ist ferner eine Kraftwagenfelge mit Luftförderelementen im Felgenbettbereich bekannt.

Es ist Aufgabe der Erfindung, ein Verfahren zum Herstellen einer Kraftwagenfelge aus Aluminium oder einer Aluminiumlegierung für ein Rad eines Kraftfahrzeugs vorzuschlagen, welches gegenüber bekannten derartigen Verfahren Vorteile aufweist, insbesondere eine besonders rasche und kostengünstige Herstellung der Kraftwagenfelge mit besonders filigranen Strukturen ermöglicht und zudem eine hervorragende Wärmeabfuhr von der Kraftwagenfelge sicherstellt.

Dies wird durch ein Verfahren zum Herstellen einer Kraftwagenfelge mit den Merkmalen des Anspruchs 1 erreicht. Dabei ist vorgesehen, dass die Kraftwagenfelge einstückig und durchgehend in einer Gießform durch Druckgießen eines Gießmaterials hergestellt wird, wobei die Kraftwagenfelge bei dem Druckgießen mit wenigstens einem zur Förderung von Luft in bezüglich einer Längsmittelachse der Kraftwagenfelge axialer Richtung gegenüber einer senkrecht auf der Längsmittelachse stehenden gedachten Ebene angestellten Luftförderelement und/oder wenigstens einem in Umfangsrichtung entlang einer Kreislinie verlaufenden Oberflächenvergrößerungselement ausgebildet wird.

Die Kraftwagenfelge ist üblicherweise Bestandteil des Rads des Kraftfahrzeugs, wobei an dem Kraftfahrzeug mehrere Räder angeordnet sind, welche jeweils eine solche Kraftwagenfelge aufweisen. Das Kraftfahrzeug liegt in Form eines Kraftwagens vor und verfügt insoweit über mehr als zwei Räder, insbesondere über genau vier Räder. Die Kraftwagenfelge ist explizit für den Einsatz bei einem solchen als Kraftwagen ausgebildeten Kraftfahrzeug vorgesehen und ausgebildet. Die Kraftwagenfelge liegt also nicht als generische Kraftfahrzeugfelge vor, sondern ist für den Einsatz an dem Kraftwagen bestimmt und entsprechend ausgebildet.

Die Kraftwagenfelge weist als wesentliche Bestandteile das Felgenbett, die Felgenmitte und die Nabe auf. Das Felgenbett und die Nabe sind über die Felgenmitte miteinander verbunden, wobei zumindest das Felgenbett, die Felgenmitte und die Nabe einstückig und materialeinheitlich miteinander ausgebildet sind. Das Felgenbett, die Felgenmitte und die Nabe werden hierzu gleichzeitig miteinander ausgebildet, nämlich während eines einzigen Herstellungsschritts. Es ist also nicht vorgesehen, das Felgenbett, die Felgenmitte und die Nabe separat voneinander herzustellen und nachträglich aneinander zu befestigen. Vielmehr erfolgt die Herstellung gemeinsam, nämlich durch das Druckgießen des Gießmaterials in der Gießform.

Die Kraftwagenfelge weist eine Längsmittelachse auf, welche insbesondere einer Längsmittelachse der Nabe entspricht und bevorzugt mit einer späteren Drehachse des Rads zusammenfällt oder zumindest nahezu zusammenfällt. In axialer Richtung bezüglich dieser Längsmittelachse gesehen ist das Felgenbett auf gegenüberliegenden Seiten von dem Außenhorn und dem Innenhorn begrenzt. Das Außenhorn und das Innenhorn liegen insoweit auf gegenüberliegenden Seiten des Felgenbetts vor und schließen einen Reifenaufnahmebereich der Kraftwagenfelge im Längsschnitt bezüglich der Längsmittelachse gesehen zwischen sich ein. Der Reifenaufnahmebereich dient der Aufnahme eines Reifens, der zusammen mit der Kraftwagenfelge das Rad ausbildet. Reifenaufnahmebereich wird in radialer Richtung nach innen von dem Felgenbett und in axialer Richtung auf gegenüberliegenden Seiten von dem Außenhorn und dem Innenhorn begrenzt.

Besonders bevorzugt ist die gesamte Kraftwagenfelge in axialer Richtung beziehungsweise im Längsschnitt gesehen in einer ersten Richtung von dem Außenhorn und in einer zweiten Richtung von dem Innenhorn begrenzt, sodass das Außenhorn und das Innenhorn eine Gesamterstreckung der Kraftwagenfelge in axialer Richtung, entsprechend einer Breite der Kraftwagenfelge, definieren. Bei einer Montage des Rads an dem Kraftfahrzeug wird das Rad über ein Radlager an einem Radträger drehbar gelagert. Das Außenhorn liegt nach der Montage des Rads an dem Kraftfahrzeug auf einer von dem Radträger abgewandten Seite der Kraftwagenfelge und das Innenhorn auf einer dem Radträger zugewandten Seite der Kraftwagenfelge vor.

Das Außenhorn und das Innenhorn liegen in Form eines von dem Felgenbett ausgehenden Radialvorsprungs vor, der sich von dem Felgenbett in radialer Richtung nach außen erstreckt, wiederum bezogen auf die Längsmittelachse der Kraftwagenfelge. Selbstverständlich sind auch das Außenhorn und das Innenhorn einstückig und materialeinheitlich mit dem Rest der Kraftwagenfelge, insbesondere dem Felgenbett, der Fehlgenmitte und der Nabe ausgebildet. Sie werden insoweit gleichzeitig mit diesen bei dem Druckgießen ausgebildet.

Die Nabe verfügt über die Mittenausnehmung und den Lochkreis. Die Mittenausnehmung ist eine zentrale Ausnehmung zur Aufnahme einer Radnabe des Kraftfahrzeugs, an welcher das Rad bei der Montage an dem Kraftfahrzeug befestigt wird. Die Radnabe ist über das Radlager an dem Radträger drehbar gelagert. Der Lochkreis besteht aus mehreren entlang eines gedachten Kreises angeordneten Bohrungen, die jeweils zur Aufnahme eines Befestigungsmittels dienen, mithilfe dessen die Kraftwagenfelge an der Radnabe befestigt wird. Das Befestigungsmittel liegt beispielsweise in Form einer Schraube, eines Bolzens oder dergleichen vor.

Das Felgenbett und die Nabe sind über die Felgenmitte miteinander verbunden. Die Felgenmitte liegt also in radialer Richtung bezüglich der Längsmittelachse gesehen zwischen dem Felgenbett und der Nabe vor. Sie erstreckt sich in radialer Richtung gesehen von der Nabe bis hin zu dem Felgenbett. Beispielsweise weist die Felgenmitte mehrere Speichen auf, welche in Umfangsrichtung voneinander beabstandet angeordnet beziehungsweise ausgebildet sind. Die Felgenmitte kann jedoch auch in Umfangsrichtung durchgehend ausgestaltet sein, insbesondere vollständig.

Die Felgenmitte greift in axialer Richtung beziehungsweise im Längsschnitt gesehen vorzugsweise außermittig an dem Felgenbett an. Das bedeutet, dass sie abseits eines Mittelpunkts des Felgenbetts in axialer Richtung in dieses übergeht. Bevorzugt greift die Felgenmitte mit einem Abstand von dem Mittelpunkt des Felgenbetts in axialer Richtung an, der bezogen auf eine Gesamterstreckung des Felgenbetts in axialer Richtung mindestens 10 %, mindestens 20 %, mindestens 30 %, mindestens 40 % oder mehr beträgt. Beispielsweise geht die Felgenmitte in axialer Richtung gesehen endseitig des Felgenbetts in dieses über. In diesem Fall mündet die Felgenmitte im Längsschnitt gesehen in Überdeckung mit dem Außenhorn oder dem Innenhorn, bevorzugt ersterem, in das Felgenbett ein. Aufgrund der außermittig an dem Felgenbett angreifenden Felgenmitte wirkt auf die Felgenmitte nach der Montage des Rads an dem Kraftfahrzeug nicht nur eine Kraft in radialer Richtung, sondern zusätzlich ein Biegemoment in axialer Richtung beziehungsweise in einer die Längsmittelachse der Kraftwagenfelge aufnehmenden gedachten Ebene. Hierdurch war es bislang notwendig, die Felgenmitte unter hohem Materialeinsatz entsprechend massiv auszubilden. Selbstverständlich kann die Felgenmitte alternativ jedoch auch mittig an dem Felgenbett und/oder der Nabe angreifen.

Im Längsschnitt gesehen weist das Felgenbett in axialer Richtung bevorzugt eine größere Erstreckung auf als die Felgenmitte und die Nabe. Insbesondere ist die axiale Erstreckung des Felgenbetts größer als die axiale Erstreckung der Nabe, welche wiederum größer ist als die axiale Erstreckung der Felgenmitte. Beispielsweise beträgt die axiale Erstreckung der Nabe bezogen auf die axiale Erstreckung des Felgenbetts höchstens 50 %, höchstens 40 %, höchstens 30 %, höchstens 25 % oder höchstens 20 %. Die axiale Erstreckung der Felgenmitte beträgt bezogen auf die axiale Erstreckung des Felgenbetts beispielsweise höchstens 25 %, höchstens 20 %, höchstens 15 %, höchstens 10 % oder höchstens 5 %. Insbesondere aufgrund der außermittig an den Felgen angreifenden Felgenmitte wird durch die genannten Abmessungen eine von dem Felgenbett umgriffene Aufnahme für die Radnabe und/oder eine an dem Rad befestigte Bremsscheibe geschaffen, wobei die Radnabe und/oder die Bremsscheibe nach der Montage des Rads an dem Kraftfahrzeug in dieser Aufnahme vorliegen.

Die Kraftwagenfelge besteht durchgehend und materialeinheitlich aus dem Gießmaterial, nämlich dem Aluminium oder - bevorzugt - aus der Aluminiumlegierung. Dieses wird durch das Druckgießen verarbeitet. Bei dem Druckgießen kommt die Gießform zum Einsatz, mittels welcher die Kraftwagenfelge und damit zumindest das Felgenbett mitsamt dem Außenhorn und dem Innenhorn die Felgenmitte und die Nabe ausgebildet werden. Auch die Mittenausnehmung, welche im Übrigen auch als Radnabenaufnahme bezeichnet werden kann, wird vorzugsweise zumindest teilweise bei dem Druckgießen ausgebildet.

Das Druckgießen kann bei Normaldruck durchgeführt werden oder als Vakuumdruckgießen erfolgen. Das Vakuumdruckgießen zeichnet sich dadurch aus, dass die Gießform vor und/oder bei dem Einbringen des Gießmaterials in die Gießform zumindest teilweise evakuiert wird. Das bedeutet, dass die Gießform vor und/oder bei dem Einbringen des Gießmaterials mit einem Unterdruck beaufschlagt wird. Unter dem Unterdruck ist hierbei ein Druck zu verstehen, welcher gegenüber einem Einbringungsdruck, bei welchem das Gießmaterial in die Gießform eingebracht wird und/oder einem Umgebungsdruck in einer Außenumgebung der Gießform geringer ist. Beispielsweise beträgt der Unterdruck bezogen auf den Außendruck höchstens 50 %, höchstens 25 %, höchstens 10 % oder höchstens 5 %. Beispielsweise beträgt der Restdruck zwischen 50 mbar und 200 mbar. Unter dem Restdruck ist der absolute Druck in der Gießform zu verstehen.

Das Evakuieren der Gießform erfolgt beispielsweise mittels einer Unterdruckquelle, welche hierzu mit der Gießform in Strömungsverbindung gesetzt wird. Insbesondere wird die Gießform bereits vor dem Einbringen des Gießmaterials evakuiert. Beispielsweise erfolgt das Einbringen des Gießmaterials bei, insbesondere erst bei, Erreichen eines bestimmten Unterdrucks beziehungsweise Restdrucks in der Gießform. Es kann zusätzlich oder alternativ vorgesehen sein, die Gießform während des Einbringens des Gießmaterials zu evakuieren, also die Strömungsverbindung zwischen der Unterdruckquelle und der Gießform während des Einbringens des Gießmaterials in die Gießform aufrechtzuerhalten und die Unterdruckquelle zum Evakuieren der Gießform weiter zu betreiben. Hierdurch können besonders filigrane Strukturen der Kraftwagenfelge hergestellt werden.

Beispielsweise ist es vorgesehen, die Gießform zunächst mittels wenigstens einer Dichtung abzudichten, beispielsweise mittels einer Dichtschnur, insbesondere einer Silikondichtschnur. Anschließend wird das Gießmaterial in eine Gießkammer dosiert, die mit der Gießform strömungstechnisch verbunden ist. Hierzu ist die Gießkammer zumindest zeitweise mit einem Tiegel strömungstechnisch verbunden ist, in welchem das geschmolzene Gießmaterial bevorratet ist. Dann wird die Gießform mit dem Unterdruck beaufschlagt und das in der Gießkammer befindliche Gießmaterial in die Gießform hineingedrängt, insbesondere mittels eines druckbeaufschlagten Kolbens. Vorzugsweise besteht gleichzeitig die Strömungsverbindung zwischen der Gießkammer und dem Tiegel, insbesondere weiterhin. Das bedeutet, dass das Evakuieren der Gießkammer auch während des Einbringens des Gießmaterials erfolgt.

Während eines Fahrbetriebs des Kraftfahrzeugs kann es zu einem Wärmeeintrag in die Kraftwagenfelge und/oder wenigstens ein weiteres Element des Kraftfahrzeugs kommen. Das weitere Element ist beispielsweise eine Bremsscheibe, ein Radträger oder dergleichen. Um zumindest die Wärme von der Kraftwagenfelge abzuführen, weist die Kraftwagenfelge das wenigstens eine Luftförderelement und/oder das wenigstens eine Oberflächenvergrößerungselement auf. Hierbei können genau ein Luftförderelement oder mehrere Luftförderelemente realisiert sein. Zusätzlich oder alternativ können genau ein Oberflächenvergrößerungselement oder mehrere Oberflächenvergrößerungselemente an der Kraftwagenfelge ausgebildet werden. Sofern im Rahmen dieser Beschreibung von dem Luftförderelement gesprochen wird, so sind die Ausführungen stets auf das wenigstens eine Luftförderelement oder jedes der mehreren Luftförderelemente anwendbar. Entsprechendes gilt für Ausführungen zu dem Oberflächenvergrößerungselement, welche ebenfalls stets auf das wenigstens eine Oberflächenvergrößerungselement beziehungsweise jeder der mehreren Oberflächenvergrößerungselemente anwendbar sind.

Es kann vorgesehen sein, dass an der Kraftwagenfelge lediglich das wenigstens eine Luftförderelement, nicht jedoch das Oberflächenvergrößerungselement realisiert ist. Umgekehrt kann es selbstverständlich vorgesehen sein, dass zwar das Oberflächenvergrößerungselement an der Kraftwagenfelge vorliegt, nicht jedoch das Luftförderelement. Besonders vorteilhaft sind jedoch sowohl das Luftförderelement als auch das Oberflächenvergrößerungselement an der Kraftwagenfelge ausgebildet. Sofern im Rahmen dieser Beschreibung von dem Luftförderelement und dem Oberflächenvergrößerungselement die Rede ist, so sind die Ausführungen stets auf das jeweils vorhandene der Elemente übertragbar. Die gemeinsame Erwähnung des Luftförderelements und des Oberflächenvergrößerungselements bedeutet also nicht, dass beide Elemente tatsächlich vorliegen, wenngleich dies selbstverständlich der Fall sein kann.

Das Luftförderelement und das Oberflächenvergrößerungselement sind einstückig und durchgehend mit der Kraftwagenfelge ausgebildet. Sie werden gemeinsam mit der Kraftwagenfelge bei dem Druckgießen ausgebildet. Es ist also nicht vorgesehen, das Luftförderelement und das Oberflächenvergrößerungselement unabhängig von der Kraftwagenfelge herzustellen und nachfolgend an dieser zu befestigen. Hierdurch wird eine besonders effiziente Herstellung der Kraftwagenfelge realisiert.

Das Luftförderelement ist derart ausgestaltet, dass es bei einer Drehbewegung der Kraftwagenfelge um ihre Längsmittelachse eine Förderwirkung auf die Kraftwagenfelge umgebende Luft ausübt. Bei der Drehbewegung der Kraftwagenfelge fördert das Luftförderelement die Luft in axialer Richtung bezüglich der Längsmittelachse, beispielsweise von einer Felgeninnenseite der Kraftwagenfelge in Richtung einer Felgenaußenseite oder umgekehrt. Mithilfe des Luftförderelements soll bei einem Fahrbetrieb des Kraftfahrzeugs, also der Drehbewegung der Kraftwagenfelge, eine Luftströmung in axialer Richtung bewirkt werden, welche eine effiziente Kühlung der Kraftwagenfelge und/oder des wenigstens einen weiteren Elements bewirkt. Beispielsweise kann mittels des Luftförderelements warme Luft von dem weiteren Element abgeführt werden, insbesondere indem die auf der Felgeninnenseite vorliegende warme Luft in Richtung der Felgenaußenseite gefördert wird beziehungsweise auf die Felgenaußenseite abgeführt wird. Unter der Felgeninnenseite ist insbesondere eine Seite der Kraftwagenfelge zu verstehen, welche dem Radträger zugewandt ist, wohingegen die Felgenaußenseite die dem Radträger abgewandte Seite der Kraftwagenfelge ist.

Das weitere Element, beispielsweise die Bremsscheibe, liegt üblicherweise auf der Felgeninnenseite vor, beispielsweise wird sie zumindest bereichsweise von dem Felgenbett umgriffen, sodass sie schlussendlich in der Kraftwagenfelge angeordnet ist. Bevorzugt ist das weitere Element nach der Montage der Kraftwagenfelge an dem Kraftfahrzeug drehfest mit der Kraftwagenfelge verbunden. Die Luftförderwirkung des Luftförderelements wird durch die Anstellung des Luftförderelements bezüglich der gedachten Ebene erzielt, wobei die Ebene senkrecht auf der Längsmittelachse der Kraftwagenfelge steht. Das Luftförderelement kann grundsätzlich im Querschnitt gesehen plattenförmig sein und ausschließlich aufgrund seiner Anstellung die Luftförderwirkung aufweisen. Es kann jedoch auch vorgesehen sein, dass das Luftförderelement im Querschnitt gesehen tragflächenförmig ist, also als strömungstechnisches Profil vorliegt. Mit einer derartigen Ausgestaltung des Luftfahrelements wird eine besonders effiziente und effektive Förderung der Luft erzielt.

Zusätzlich oder alternativ zu dem wenigstens einen Luftförderelement weist die Kraftwagenfelge das wenigstens eine Oberflächenvergrößerungselement auf. Auch das Oberflächenvergrößerungselement dient schlussendlich der Abführung von Wärme. Dieses wird durch eine Oberflächenvergrößerung der Kraftwagenfelge erzielt, sodass die Wärme aufgrund von natürlicher Konvention und/oder von erzwungener Konvektion über das Oberflächenvergrößerungselement von der Kraftwagenfelge abgeführt beziehungsweise aus ihr ausgetragen wird. Das Oberflächenvergrößerungselement erstreckt sich in Umfangsrichtung entlang der gedachten Kreislinie, sodass das Oberflächenvergrößerungselement zumindest bereichsweise, insbesondere nur bereichsweise oder durchgehend, ringförmig ist. Das Oberflächenvergrößerungselement umgreift hierbei die Längsmittelachse der Kraftwagenfelge zumindest teilweise, beispielsweise also nur teilweise oder vollständig. Insbesondere erstreckt sich das Oberflächenvergrößerungselement in Umfangsrichtung über mindestens 30°, mindestens 60°, mindestens 90° oder mindestens 180°.

Besonders bevorzugt ist selbstverständlich eine Ausgestaltung der Kraftwagenfelge, bei welcher das wenigstens eine Oberflächenvergrößerungselement zusätzlich zu dem wenigstens einen Luftförderelement vorliegt. Bei einer solchen Ausgestaltung sind das Luftförderelement und das Oberflächenvergrößerungselement bevorzugt derart angeordnet und ausgebildet, dass der von dem Luftförderelement bei der Drehbewegung der Kraftwagenfelge bewirkte Luftstrom das Oberflächenvergrößerungselement anströmt und/oder überströmt. Eine solche Ausgestaltung der Kraftwagenfelge ermöglicht ein besonders effektives Abführen der Wärme. Beispielsweise sind zudem das Oberflächenvergrößerungselement und das Luftförderelement miteinander verbunden beziehungsweise aneinander befestigt.

Das beschriebene Vorgehen bei dem Herstellen der Kraftwagenfelge ermöglicht eine einfache, schnelle und kostengünstige Ausbildung der Kraftwagenfelge, welche gleichzeitig eine äußerst filigrane Struktur aufweisen kann und zudem für ein effektives Abführen von Wärme vorgesehen und ausgebildet ist. Die schnelle Herstellung wird insbesondere durch das Druckgießen erzielt, bei welchem eine deutlich schnellere Füllung der Gießform erfolgt als bei einem Kokillengießen oder Niederdruckgießen, welches normalerweise zum Herstellen von Kraftwagenfelgen verwendet wird. Insgesamt lässt sich durch das Druckgießen also die Taktung bei dem Herstellen der Kraftwagenfelge deutlich erhöhen, sodass in derselben Zeitspanne eine größere Anzahl an Kraftwagenfelgen herstellbar ist. Auch die Erstarrungszeit ist für das Druckgießen deutlich kürzer als für das Kokillengießen.

Eine Weiterbildung der Erfindung sieht vor, dass die Kraftwagenfelge wenigstens bereichsweise eine geringe Wandstärke von höchstens 15 mm aufweist und/oder eine Krümmung mit einem geringen Krümmungsradius von höchstens 4 mm aufweist und/oder eine in axialer Richtung und in radialer Richtung und/oder in axialer Richtung und in tangentialer Richtung bezüglich einer Längsmittelachse der Kraftwagenfelge verlaufende Entformungsfläche aufweist, die vollständig in einer gedachten Ebene liegt, wobei die Ebene mit der Längsmittelachse einen Winkel einschließt, der mehr als 0° und höchstens 4° beträgt. Bevorzugt gilt dies für das Luftförderelement und/oder das Oberflächenvergrößerungselement. Es kann also vorgesehen sein, dass das Luftförderelement und/oder das Oberflächenvergrößerungselement die geringe Wandstärke und/oder die Krümmung mit dem geringen Krümmungsradius aufweisen, und/oder dass an ihnen die Entformungsfläche ausgebildet ist.

Die mittels des Druckgießens hergestellte Kraftwagenfelge zeichnet sich grundsätzlich durch eine besonders geringe Wandstärke und/oder eine Krümmung mit einem besonders geringen Krümmungsradius und/oder durch das Vorliegen der Entformungsfläche aus. Unter der Wandstärke ist die Dicke der Wand der Kraftwagenfelge an wenigstens einer Stelle zu verstehen. Die geringe Wandstärke kann also zum Beispiel an dem Felgenbett, dem Außenhorn, dem Innenhorn, der Felgenmitte und/oder der Nabe vorliegen. Besonders bevorzugt liegt die geringe Wandstärke an der Felgenmitte vor. Ganz besonders bevorzugt stellt die geringe Wandstärke die größte Wandstärke dar, beispielsweise die größte Wandstärke des Außenhorns, die größte Wandstärke des Innenhorns und/oder die größte Wandstärke der Felgenmitte. Selbstverständlich kann sie auch die größte Wandstärke des Felgenbetts und/oder der Nabe sein.

Die geringe Wandstärke beträgt höchstens 15 mm, höchstens 10 mm, höchstens 7,5 mm oder höchstens 5 mm, ist bevorzugt jedoch kleiner. Somit beträgt sie beispielsweise höchstens 4 mm, höchstens 3 mm, höchstens 2 mm oder höchstens 1,5 mm. Umgekehrt beträgt die geringe Wandstärke besonders bevorzugt mindestens 1,5 mm oder mindestens 2 mm. **In** anderen Worten beträgt die geringe Wandstärke zum Beispiel mindestens 1,5 mm und höchstens 5 mm, mindestens 1,5 mm und höchstens 4 mm, mindestens 1,5 mm und höchstens 3 mm, mindestens 1,5 mm und höchstens 2 mm oder in etwa oder genau 1,5 mm. Sie kann jedoch auch mindestens 2 mm und höchstens 5 mm, mindestens 2 mm und höchstens 4 mm, mindestens 2 mm und höchstens 3 mm oder genau 2 mm betragen.

Zusätzlich oder alternativ zu der geringen Wandstärke liegt die Krümmung mit dem geringen Krümmungsradius vor. Die Krümmung ist eine Krümmung einer Außenfläche beziehungsweise einer Außenumfangsfläche der Kraftwagenfelge. Die Außenfläche begrenzt eine Wandung der Kraftfahrzeugfelge nach außen. Die Krümmung kann an einer beliebigen Stelle der Kraftwagenfelge vorliegen, beispielsweise an dem Felgenbett, dem Außenhorn, dem Innenhorn, der Felgenmitte und/oder der Nabe. Die Krümmung ist insbesondere eine Übergangskrümmung zwischen zwei Flächen, welche - im Schnitt gesehen - gegeneinander angewinkelt sind und beispielsweise als plane Flächen vorliegen.

Die Krümmung erstreckt sich vorzugsweise über einen Winkel von mindestens 30°, mindestens 45°, mindestens 60° oder mindestens 90°. Die Krümmung weist den geringen Krümmungsradius auf, welcher höchstens 4 mm beträgt, bevorzugt jedoch kleiner ist. Beispielsweise entspricht der geringe Krümmungsradius insoweit also beispielsweise einem Krümmungsradius von höchstens 3 mm, höchstens 2 mm, höchstens 1,5 mm oder höchstens 1 mm. Umgekehrt kann der Krümmungsradius zusätzlich mindestens 0,25 mm, mindestens 0,5 mm oder mindestens 0,75 mm betragen.

Zusätzlich oder alternativ zu der geringen Wandstärke und/oder der Krümmung mit dem geringen Krümmungsradius kann die Kraftwagenfelge die Entformungsfläche aufweisen. Unter der Entformungsfläche ist eine ebene Fläche zu verstehen, die bei dem Druckgießen unmittelbar an der Gießform anliegt und entlang welcher nach dem Druckgießen das Entformen der Kraftwagenfelge aus der Gießform erfolgt. Die Entformungsfläche weist eine Erstreckung zumindest in axialer Richtung und in radialer Richtung und/oder - zusätzlich oder alternativ - in axialer Richtung und in tangentialer Richtung, jeweils bezüglich der Längsmittelachse der Kraftwagenfelge auf. In jedem Fall weist die Entformungsfläche also eine Erstreckung in zwei senkrecht aufeinander stehenden Richtungen auf und liegt insoweit vollständig in der gedachten Ebene.

Das Entformen der Kraftwagenfelge erfolgt in derselben Richtung. Beispielsweise wird ein Teil der Gießform nach dem Druckgießen in Richtung der Längsmittelachse, also in axialer Richtung, zum Öffnen der Gießform und zum Entnehmen der Kraftwagenfelge aus der Gießform verlagert. Das bedeutet, dass eine während des Druckgießens an der Entformungsfläche anliegende und diese ausbildende Gießformfläche der Gießform nach dem Druckgießen entlang der Längsmittelachse verlagert wird. Bei einem herkömmlichen Verfahren zum Herstellen einer Kraftwagenfelge muss ein Entformungswinkel, also ein zwischen der Entformungsfläche und der Längsmittelachse vorliegender Winkel, mindestens 5° betragen, um ein ordnungsgemäßes Entformen sicherzustellen.

Aufgrund des einstückigen und durchgehenden Ausbildens der Kraftwagenfelge durch Druckgießen aus Aluminium beziehungsweise der Aluminiumlegierung ist jedoch ein deutlich geringerer Winkel realisierbar. Der Winkel zwischen der Entformungsfläche beziehungsweise zwischen der die Entformungsfläche vollständig aufnehmenden Ebene und der Längsmittelachse beträgt insoweit zwischen infinitesimal mehr als 0° und 4°, diese Werte jeweils einschließend. Es kann also vorgesehen sein, dass die Entformungsfläche nahezu parallel zu der Längsmittelachse verläuft, sodass bei dem Entformen ein nahezu paralleles Verlagern der Gießformfläche und der Entformungsfläche auftritt. Unter dem Winkel von 0° ist zu verstehen, dass die Ebene und die Längsmittelachse ineinander liegen oder parallel zueinander verlaufen. Der Winkel beträgt beispielsweise mindestens 0,5°, mindestens 1° oder mindestens 1,5°. Höchstens ist jedoch ein Winkel von 4° vorgesehen. Beispielsweise beträgt der Winkel höchstens 3°, höchstens 2,0°, höchstens 1,5°, höchstens 1,0° oder höchsten 0,5°. Bevorzugt sind hierbei die kleineren Winkel von höchstens 2,0° und weniger.

Vorzugsweise ist es vorgesehen, dass das Luftförderelement und/oder das Oberflächenvergrößerungselement die geringe Wandstärke und/oder die Krümmung mit dem geringen Krümmungsradius und/oder die Entformungsfläche aufweisen. Besonders bevorzugt sind das Luftförderelement und das Oberflächenvergrößerungselement jedoch zumindest mit der geringen Wandstärke ausgebildet, welche besonders bevorzugt höchstens 7,5 mm, höchstens 5 mm oder höchstens 2,5 mm beträgt. Mit einer derartigen Ausgestaltung der Kraftwagenfelge kann die beschriebene Kühlwirkung bei gleichzeitig geringem Gewicht der Kraftwagenfelge erzielt werden.

Eine Weiterbildung der Erfindung sieht vor, dass sich das Luftförderelement von der Nabe bis hin zu dem Felgenbett erstreckt und in radialer Richtung mit einer Tragfähigkeit hergestellt wird, die mindestens 2,5%, mindestens 5 %, mindestens 7,5% oder mindestens 10 % der Tragfähigkeit der Felgenmitte in radialer Richtung entspricht. Unter der Tragfähigkeit ist die Belastbarkeit in radialer Richtung zwischen der Nabe und dem Felgenbett zu verstehen.

Das Luftförderelement erstreckt sich insoweit in radialer Richtung ausgehend von der Nabe bis hin zu dem Felgenbett. Die Tragfähigkeit des Luftförderelements soll kleiner sein als die Tragfähigkeit der Felgenmitte. Mindestens entspricht die Tragfähigkeit jedoch einem der genannten Werte.

Unter der Tragfähigkeit der Felgenmitte ist hierbei die Tragfähigkeit der gesamten Felgenmitte zu verstehen, unabhängig ob diese durchgehend ausgestaltet ist oder mehrere Speichen aufweist. Sind der Felgenmitte mehrere Speichen zugeordnet, so weist das Luftförderelement beispielsweise eine Tragfähigkeit in radialer Richtung auf, die mindestens 25 %, mindestens 50 % oder mindestens 75 % der Tragfähigkeit einer der Speichen entspricht. Zusätzlich oder alternativ beträgt die Tragfähigkeit des Luftförderelements jedoch höchstens 75 %, höchstens 50 % oder höchstens 25 % der Tragfähigkeit einer der Speichen. Beispielsweise beträgt die Tragfähigkeit des Luftförderelements also mindestens 25 % und höchstens 75 %, mindestens 25 % und höchstens 50 % oder genau oder in etwa 25 % der Tragfähigkeit einer der Speichen.

Beispielsweise ist jeder der mehreren Speichen jeweils wenigstens ein Luftförderelement, insbesondere genau ein Luftförderelement, zugeordnet. Bevorzugt ist das jeweilige Luftförderelement an der entsprechenden Speiche angeordnet. Vorzugsweise geht das Luftförderelement von der jeweiligen Speiche aus und ist in radialer Richtung von innen nach außen durchgehend mit der Speiche verbunden. Insoweit entspricht zum Beispiel die Anzahl der Luftförderelemente der Anzahl der Speichen. Es kann jedoch auch vorgesehen sein, dass die Anzahl der Luftförderelemente größer oder kleiner ist als die Anzahl der Speichen. Beispielsweise ist lediglich jeder zweiten, jeder dritten oder jeder vierten der Speiche ein Luftförderelement zugeordnet. Umgekehrt können jeder der Speichen auch mehrere Luftförderelemente zugeordnet sein, welche insbesondere in Umfangsrichtung voneinander beabstandet an der jeweiligen Speiche angeordnet sind. Hierdurch kann eine besonders effektive Wärmeeinfuhr erzielt werden.

Eine Weiterbildung der Erfindung sieht vor, dass die Felgenmitte mit mehreren in Umfangsrichtung bezüglich einer Längsmittelachse der Kraftwagenfelge voneinander beabstandeten Speichen ausgebildet wird. Eine solche Ausgestaltung der Felgenmitte wird insbesondere zur Gewichtsreduzierung der Kraftwagenfelge angewandt, jedoch auch zur Erzielung einer besseren Dämpfung. Die Felgenmitte ist insoweit nicht massiv und in Umfangsrichtung durchgehend ausgestaltet, sondern setzt sich aus den mehreren Speichen zusammen, die in Umfangsrichtung voneinander beabstandet angeordnet sind. Vorzugsweise erstreckt sich jede der mehreren Speichen von der Nabe in radialer Richtung bis hin zu dem Felgenbett, verbindet also die Nabe und das Felgenbett miteinander. Beispielsweise sind wenigstens drei Speichen, wenigstens vier Speichen, wenigstens fünf Speichen oder wenigstens sechs Speichen vorgesehen. Beispielsweise sind mindestens 10, mindestens 14 oder mindestens 18 Speichen realisiert. Vorzugsweise liegen höchstens 30 Speichen oder höchstens 20 Speichen vor. Beispielsweise erstreckt sich jede der Speichen in Umfangsrichtung über höchstens 30° oder weniger, bevorzugt höchstens 15° oder höchstens 10°.

Es kann vorgesehen sein, dass die Speichen eine konstante Erstreckung in Umfangsrichtung aufweisen, also ausgehend von dem Felgenbett bis hin zu der Nabe. Es kann jedoch auch eine Verästelung wenigstens einer der Speichen oder mehrerer oder jeder der Speichen vorgesehen sein, sodass sich also die jeweilige Speiche in mehrere Teilspeichen aufteilt. Beispielsweise erstreckt sich die Speiche zunächst ausgehend von der Nabe in radialer Richtung nach außen und teilt sich an einer Teilungsstelle in mehrere Teilspeichen auf, welche voneinander fortlaufen, insbesondere in Umfangsrichtung. Nach der Teilungsstelle verlaufen die Teilspeichen also voneinander beabstandet bis hin zu dem Felgenbett und greifen beabstandet voneinander an diesem an. Es kann vorgesehen sein, dass eine Längsmittelachse zumindest einer der Speichen, insbesondere die Längsmittelachsen mehrerer oder aller Speichen, die Längsmittelachse der Kraftwagenfelge schneiden oder sogar senkrecht auf ihr stehen. Hierdurch wird eine besonders optimale Krafteinleitung aus der Felgenmitte beziehungsweise von den Speichen in die Nabe erzielt.

Eine Weiterbildung der Erfindung sieht vor, dass die Kraftwagenfelge bereichsweise mit einer ersten Wandstärke von mehr als 15 mm, insbesondere mindestens 17,5 mm oder mindestens 20 mm, und bereichsweise mit einer der geringen Wandstärke entsprechenden zweiten Wandstärke hergestellt wird. Beispielsweise ist vorgesehen, dass die Kraftwagenfelge bereichsweise mit einer ersten Wandstärke von mehr als 5 mm, insbesondere mindestens 7,5 mm oder mindestens 10 mm, jedoch höchstens 20 mm, und bereichsweise mit einer der geringen Wandstärke entsprechenden zweiten Wandstärke hergestellt wird. Die zweite Wandstärke beträgt vorzugsweise mindestens 1,5 mm oder mindestens 2 mm und höchstens 15 mm, höchstens 10 mm, höchstens 7,5 mm oder höchstens 5 mm, vorzugsweise höchstens 3 mm, höchstens 2,5 mm oder höchstens 2 mm. Die Kraftwagenfelge weist also nicht vollständig durchgehend die geringe Wandstärke auf, sondern setzt sich aus mehreren Teilen zusammen, von welchen einige die erste Wandstärke und andere die zweite Wandstärke aufweisen. Hierbei ist die erste Wandstärke ganz allgemein größer als die zweite Wandstärke, beispielsweise um einen Faktor von mindestens 1,5, mindestens 2,0 oder mindestens 2,5. Beispielsweise sind die erste Wandstärke und die zweite Wandstärke beide in der Felgenmitte umgesetzt. So kann insbesondere jede der Speichen - sofern vorhanden - teilweise die erste Wandstärke und teilweise die zweite Wandstärke aufweisen. Hierdurch wird eine besonders hohe Tragfähigkeit der Kraftwagenfelge bei gleichzeitig äußerst filigraner Gestaltung erzielt.

Eine Weiterbildung der Erfindung sieht vor, dass die geringe Wandstärke in einem in Umfangsrichtung zwischen zwei Speichen liegenden Bereich verwendet wird, sodass die beiden Speichen über ein bei dem Druckgießen hergestelltes Zwischenspeicherelement miteinander verbunden werden, dass zumindest bereichsweise, insbesondere durchgehend, die geringe Wandstärke aufweist. Der in Umfangsrichtung zwischen den zwei Speichen liegende Bereich kann auch als Zwischenspeichenbereich bezeichnet werden. Der Zwischenspeichenbereich erstreckt sich in Umfangsrichtung zwischen den beiden Speichen und wird in radialer Richtung nach innen von der Nabe und in radialer Richtung nach außen von dem Felgenbett begrenzt. Insoweit liegt der Zwischenspeichenbereich randgeschlossen an der Kraftwagenfelge vor.

Der Zwischenspeichenbereich ist nun zumindest teilweise oder sogar vollständig mit dem Zwischenspeichenelement versehen, sodass der Bereich zwischen den beiden Speichen zumindest teilweise oder sogar vollständig mit dem Zwischenspeichenelement verschlossen ist. Dabei weist das Zwischenspeichenelement die geringe Wandstärke auf. Die beiden Speichen hingegen können eine größere Wandstärke als die geringe Wandstärke aufweisen, beispielsweise eine der ersten Wandstärke entsprechende Wandstärke. Selbstverständlich kann es jedoch auch vorgesehen sein, dass die beiden Speichen mit der geringen Wandstärke ausgestaltet sind. In diesem Fall wird für das Zwischenspeichenelement ebenfalls die geringe Wandstärke verwendet, insbesondere durchgehend, oder eine Wandstärke, die kleiner ist als die geringe Wandstärke. Mithilfe des Zwischenspeichenelements werden für die Kraftwagenfelge hervorragende aerodynamische Eigenschaften erzielt.

Eine Weiterbildung der Erfindung sieht vor, dass das Zwischenspeichenelement einen Bereich vollständig ausfüllend ausgebildet wird, der in Umfangsrichtung von den beiden Speichen, in radialer Richtung nach innen von der Nabe und in radialer Richtung nach außen von dem Felgenbett begrenzt ist. Auf eine derartige Ausgestaltung wurde vorstehend bereits hingewiesen. Das Zwischenspeichenelement füllt also den Zwischenspeichenbereich vollständig aus beziehungsweise verschließt ihn durchgehend. Hierdurch werden besonders gute aerodynamische Eigenschaften realisiert.

Eine Weiterbildung der Erfindung sieht vor, dass das Luftförderelement und/oder das Oberflächenvergrößerungselement von der Felgenmitte, insbesondere von der wenigstens einen Speiche ausgehend ausgebildet werden. Vorzugsweise erstreckt sich das Luftförderelement beziehungsweise das Oberflächenvergrößerungselement von der Felgenmitte in axialer Richtung fort, sodass es auf seiner der Felgenmitte abgewandten Seite ein freies Ende aufweist. Im Falle des Luftförderelements kann das freie Ende in Form einer geraden Linie vorliegen oder aber gekrümmt sein, insbesondere mit einer sich in radialer Richtung von innen nach außen beziehungsweise umgekehrt konstanten oder sich verändernden Krümmung. Das freie Ende des Oberflächenvergrößerungselements ist vorzugsweise kreisförmig oder zumindest teilkreisförmig. Das Oberflächenvergrößerungselement liegt insoweit vorzugsweise hohlzylinderförmig, insbesondere hohlkreiszylinderförmig vor. Weist die Felgenmitte die mehreren Speichen auf, so ist das wenigstens eine Luftförderelement vorzugsweise an zumindest einer der Speichen befestigt. Es wurde bereits darauf hingewiesen, dass den mehreren Speichen auch mehrere Luftförderelemente zugeordnet sein können. Das Oberflächenvergrößerungselement verbindet im Falle der mehreren Speichen vorzugsweise mehrere Speichen miteinander, greift also an mehreren der Speichen, insbesondere an allen Speichen, an. Im letzteren Fall ist es vorzugsweise in Umfangsrichtung durchgehend ausgebildet, umgreift also die Längsmittelachse der Kraftwagenfelge vollständig. Die beschriebene Ausgestaltung ermöglicht eine besonders hohe Kühlwirkung der Kraftwagenfelge.

Die Erfindung sieht vor, dass das Luftförderelement und/oder das Oberflächenvergrößerungselement felgeninnenseitig an der Kraftwagenfelge ausgebildet werden. In anderen Worten erstreckt sich das Luftförderelement beziehungsweise das Oberflächenvergrößerungselement in axialer Richtung, also im Längsschnitt gesehen, in Richtung des Innenhorns. Hierdurch sind bevorzugt das Luftförderelement beziehungsweise das Oberflächenvergrößerungselement ebenfalls im Längsschnitt gesehen vollständig in der Kraftwagenfelge aufgenommen. Idealerweise sind das Luftförderelement und/oder das Oberflächenvergrößerungselement derart angeordnet, dass sie von einer Felgenaußenseite bei normaler Betrachtung nicht oder lediglich kaum sichtbar sind. Hierdurch wird ein hervorragender optischer Eindruck der Kraftwagenfelge trotz des Luftförderelements beziehungsweise des Oberflächenvergrößerungselements erzielt.

Eine Weiterbildung der Erfindung sieht vor, dass das Oberflächenvergrößerungselement von dem Luftförderelement ausgehend ausgebildet wird. Das Oberflächenvergrößerungselement erstreckt sich also in Umfangsrichtung ausgehend von dem Luftförderelement. Beispielsweise erstreckt es sich wiederum bis hin zu dem Luftförderelement, sodass das Oberflächenvergrößerungselement beidseitig an dem Luftförderelement angreift. Es kann jedoch auch vorgesehen sein, dass sich das Oberflächenvergrößerungselement ausgehend von einem von mehreren Luftförderelementen bis hin zu einem anderen der mehreren Luftförderelemente erstreckt. Hierdurch ist eine besonders geringe Wandstärke des Luftförderelements realisierbar, weil es von dem Oberflächenvergrößerungselement gestützt wird.

Eine Weiterbildung der Erfindung sieht vor, dass das Luftförderelement sich in radialer Richtung bezüglich der Längsmittelachse von der Nabe bis zu dem Felgenbett erstreckend ausgebildet wird. Hierauf wurde vorstehend bereits hingewiesen.

Eine Weiterbildung der Erfindung sieht vor, dass das Luftförderelement im Längsschnitt gesehen mit einer Erstreckung in axialer Richtung ausgebildet wird, die höchstens einer Erstreckung der Felgenmitte derselben Richtung entspricht oder höchstens um 50 %, höchstens 40 %, höchstens 30 %, höchstens 20 % oder höchstens 10 % größer ist als diese. Umgekehrt weist das Luftförderelement im Längsschnitt gesehen beispielsweise eine Erstreckung in axialer Richtung auf, die mindestens 50 %, mindestens 75 % oder mindestens 100 % der Erstreckung der Felgenmitte in dieser Richtung entspricht. Eine derartige Ausgestaltung stellt einen hervorragenden optischen Eindruck der Kraftwagenfelge bei gleichzeitig hoher Tragfähigkeit sicher.

Eine Weiterbildung der Erfindung sieht vor, dass die bei dem Druckgießen verwendete Gießform Bestandteil eines Druckgießwerkzeugs, insbesondere eines Zweiplattendruckgießwerkzeugs oder eines Dreiplattendruckgießwerkzeugs ist und das Gießmaterial durch wenigstens eine Einspritzöffnung, insbesondere durch mehrere Einspritzöffnungen, in die Gießform eingebracht wird. Das Dreiplattendruckgießwerkzeug zeichnet sich dadurch aus, dass sein Angusssystem in einer anderen Ebene vorliegt als die Einspritzöffnung. Das Dreiplattendruckgießwerkzeug weist drei Platten auf, nämlich eine erste Platte, eine zweite Platte und eine dritte Platte. Zwischen der ersten Platte und der zweiten Platte liegt bevorzugt wenigstens ein Angusskanal vor, über welchen die Einspritzöffnung mit einer Einlassöffnung strömungstechnisch verbunden ist.

Durch die Einlassöffnung wird der Gießform das Gießmaterial zugeführt. Zwischen der zweiten Platte und der dritten Platte wird hingegen die Kraftwagenfelge ausgebildet. Das bedeutet, dass die zweite Platte und die dritte Platte die eigentliche Gießform bilden. Der wenigstens eine Angusskanal und die herzustellende Kraftwagenfelge liegen auf gegenüberliegenden Seiten der zweiten Platte vor. Bevorzugt wird das Gießmaterial durch mehrere Einspritzöffnungen in die Gießform eingebracht. Die mehreren Einspritzöffnungen sind vorzugsweise über den Angusskanal oder über mehrere Angusskanäle jeweils mit der Einlassöffnung strömungstechnisch verbunden. Die Verwendung des Zweiplattendruckgießwerkzeugs oder des Dreiplattendruckgießwerkzeugs ermöglicht eine besonders einfache und rasche Herstellung der Kraftwagenfelge.

Eine Weiterbildung der Erfindung sieht vor, dass die Kraftwagenfelge aus AlSi10MnMgZn hergestellt wird. Diese Aluminiumlegierung dient insoweit als Gießmaterial. Die Aluminiumlegierung weist hervorragende Festigkeitseigenschaften für die Kraftwagenfelge auf. Beispielsweise kommt als Gießmaterial eine AlSi-Legierung zum Einsatz, die folgende Bestandteile enthält: 6,5 Gew.-% bis 12,0 Gew.-% Si, maximal 0,8 Gew.-% Mn, 0,25 Gew.-% bis 0,6 Gew.-% Mg, 0,08 Gew.-% bis 0,5 Gew.-% Zn, maximal 0,3 Gew.-% Zr, maximal 0,025 Gew.-% Sr, maximal 0,5 Gew.-% Verunreinigungen und als Rest Al. Die Legierung kann wenigstens einen der folgenden optionalen Regierungsbestandteile aufweisen: maximal 0,2 Gew.-% V, maximal 0,2 Gew.-% Mo, maximal 0,3 Gew.-% Sn, maximal 0,3 Gew.-% Co und maximal 0,2 Gew.-% Ti.

Eine solche Legierung ist im besonderen Maße für die Herstellung der Kraftwagenfelge geeignet, weil sie die Realisierung besonders filigraner Strukturen ermöglicht. Vorzugsweise ist der Anteil von Mn größer als 0 Gew.-%, beispielsweise beträgt er 0,2 Gew.-% oder 0,3 Gew.-% einerseits bis 0,8 Gew.-% andererseits. Der Anteil an Mg ist beispielsweise höchstens 0,5 Gew.-%. Bevorzugt beträgt der Anteil an Zn höchstens 0,35 Gew.-%. Weiter bevorzugt ist der Anteil an Sr größer als 0 Gew.-%, insbesondere beträgt er 0,006 Gew.-% bis 0,025 Gew.-%. Besonders bevorzugt enthält die Aluminiumlegierung Cr, nämlich maximal 0,3 Gew.-%. Unter den Verunreinigungen ist wenigstens ein Element des Periodensystems zu verstehen, das sich ohne gezielte Zugabe in der Legierung befindet. Die Verunreinigungen können selbstverständlich auch mehrere dieser Elemente enthalten.

Eine Weiterbildung der Erfindung sieht vor, dass die Kraftwagenfelge nach dem Druckgießen wärmebehandelt wird. Das Wärmebehandeln ist beispielsweise ein Glühen der Kraftwagenfelge. Das Glühen umfasst zumindest ein Anwärmen der Kraftwagenfelge auf eine bestimmte Temperatur, welche auch als Halttemperatur bezeichnet werden kann, ein Halten der Kraftwagenfelge auf der Haltetemperatur und ein nachfolgendes Abkühlen von der Haltetemperatur, insbesondere bis auf eine Temperatur von höchstens 200°C oder bis auf eine Umgebungstemperatur.

Es kann vorgesehen sein, dass das Wärmebehandeln für die gesamte Kraftwagenfelge vorgenommen wird. Es kann jedoch auch lediglich lokal begrenzt durchgeführt werden, sodass lediglich lokalbegrenzt Wärme in die Kraftwagenfelge eingetragen wird und entsprechend an der wärmebehandelten Stelle eine höhere Temperatur auftritt als an anderen Stellen der Kraftwagenfelge, an welchen das Wärmebehandeln nicht erfolgt.

Zusätzlich oder alternativ kann das Wärmebehandeln lokal verschieden erfolgen. Hierunter ist zu verstehen, dass ein erster Bereich der Kraftwagenfelge einer ersten Wärmebehandlung und ein zweiter Bereich der Kraftwagenfelge mit einer von der ersten Wärmebehandlung verschiedenen zweiten Wärmebehandlung behandelt wird, wobei im Rahmen der ersten Wärmebehandlung beispielsweise eine erste Haltetemperatur und im Rahmen der zweiten Wärmebehandlung eine zweite Haltetemperatur verwendet wird, welche von der ersten Haltetemperatur verschieden ist.

Die Erfindung betrifft weiterhin eine Kraftwagenfelge aus Aluminium oder einer Aluminiumlegierung für ein Rad eines Kraftfahrzeugs, insbesondere hergestellt gemäß den Ausführungen im Rahmen dieser Beschreibung, wobei die Kraftwagenfelge ein auf gegenüberliegenden Seiten von einem Außenhorn und einem Innenhorn begrenztes Felgenbett, eine Nabe mit einer Mittenausnehmung und einem Lochkreis sowie eine das Felgenbett und die Nabe miteinander verbindende, insbesondere im Längsschnitt außermittig an dem Felgenbett angreifende, Felgenmitte aufweist.

Dabei ist vorgesehen, dass die Kraftwagenfelge einstückig und durchgehend in einer Gießform durch Druckgießen eines Gießmaterials hergestellt ist, wobei die Kraftwagenfelge wenigstens ein zur Förderung von Luft in bezüglich einer Längsmittelachse der Kraftwagenfelge axialer Richtung gegenüber einer senkrecht auf der Längsmittelachse stehenden gedachten Ebene angestelltes Luftförderelement und/oder wenigstens ein in Umfangsrichtung entlang einer Kreislinie verlaufendes Oberflächenvergrößerungselement aufweist, dass bei dem Druckgießen ausgebildet ist.

Auf die Vorteile einer derartigen Ausgestaltung der Kraftwagenfelge beziehungsweise einer derartigen Vorgehensweise bei ihrem Herstellen wurde vorstehend bereits hingewiesen. Sowohl die Kraftwagenfelge als auch das Verfahren zu ihrem Herstellen können gemäß den Ausführungen im Rahmen dieser Beschreibung weitergebildet sein, sodass insoweit auf diese verwiesen wird.

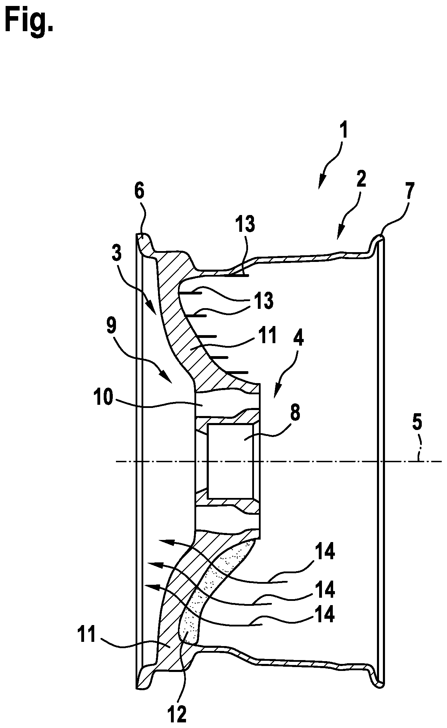

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Längsschnittdarstellung durch eine Kraftwagenfelge für ein Rad eines Kraftfahrzeugs.

Die Figur zeigt eine schematische Längsschnittdarstellung durch eine Kraftwagenfelge 1 für ein Rad eines Kraftfahrzeugs. Die Kraftwagenfelge 1 weist als wesentliche Bestandteile ein Felgenbett 2, eine Felgenmitte 3 und eine Nabe 4 auf. Gezeigt ist die Kraftwagenfelge 1 im Längsschnitt bezüglich einer Längsmittelachse 5 der Kraftwagenfelge 1. Das Felgenbett 2 ist in axialer Richtung einerseits von einem Außenhorn 6 und andererseits von einem Innenhorn 7 begrenzt, die sich ausgehend von dem Felgenbett 2 in radialer Richtung bezüglich der Längsmittelachse 5 nach außen erstrecken. Ergänzend sei angemerkt, dass sich die axiale Erstreckung des Felgenbetts 2 zu einem jeweiligen außenseitigen Ende des Außenhorns 6 beziehungsweise des Innenhorns 7 erstreckt. Die axiale Erstreckung des Felgenbetts 2 schließt also die axialen Erstreckungen des Außenhorns 6 und des Innenhorns 7 mit ein.

Das Felgenbett 2 und die Nabe 4 sind über die Felgenmitte 3 miteinander verbunden. Die Felgenmitte 3 greift also sowohl an dem Felgenbett 2 als auch an der Nabe 4 an und erstreckt sich ausgehend von der Nabe 4 bis hin zu dem Felgenbett 2. Die Nabe 4 weist eine Mittenausnehmung 8 auf, die bezüglich der Längsmittelachse 5 zentral an der Nabe 4 vorliegt und diese in axialer Richtung vollständig durchgreift. Zusätzlich weist die Nabe 4 einen Lochkreis 9 mit mehreren Bohrungen 10 auf, welche jeweils zur Aufnahme eines Befestigungsmittels dienen, mittels welchem die Kraftwagenfelge 1 an einer Radnabe des Kraftfahrzeugs befestigbar ist beziehungsweise befestigt wird.

In dem hier dargestellten Ausführungsbeispiel weist die Felgenmitte 3 mehrere Speichen 11 auf, welche in Umfangsrichtung voneinander beabstandet angeordnet sind. Jede der Speichen 11 erstreckt sich ausgehend von der Nabe 4 bis hin zu dem Felgenbett 2 in Umfangsrichtung zwischen den Speichen 11 liegt ein Zwischenspeichenbereich vor, welcher in Umfangsrichtung von den Speichen 11, in radialer Richtung nach innen von der Nabe 4 und in radialer Richtung nach außen von dem Felgenbett 2 begrenzt ist. In diesem Zwischenspeichenbereich kann ein Zwischenspeichenelement ausgebildet sein, welches den Zwischenspeichenbereich beispielsweise vollständig ausfüllt. Zumindest das Zwischenspeichenelement 12 weist eine geringe Wandstärke von höchstens 5 mm auf. Insbesondere um diese zu realisieren, wird die Kraftwagenfelge 1 einstückig und durchgehend in einer Gießform durch Druckgießen eines Gießmaterials hergestellt. Als Gießmaterial kommt Aluminium oder eine Aluminiumlegierung zum Einsatz.

Um eine gute Kühlung der Kraftwagenfelge 1 zu gewährleisten, verfügt sie über wenigstens ein Luftförderelement 12 (von welchem lediglich eines beispielhaft dargestellt ist) und über wenigstens ein Oberflächenvergrößerungselement 13. In dem hier dargestellten Ausführungsbeispiel sind mehrere Oberflächenvergrößerungselemente 13 realisiert, von welchen lediglich einige beispielhaft gekennzeichnet sind.

Das Luftförderelement 12 dient der Förderung von Luft in bezüglich der Längsmittelachse 5 axialer Richtung. Die Strömungsrichtung der Luft, welche bei einer Drehbewegung der Kraftwagenfelge 1 um die Längsmittelachse 5 mittels des Luftförderelements 12 erzielt wird, ist durch die Pfeile 14 beispielhaft angedeutet. Das Luftförderelement 12 erstreckt sich ausgehend von der Speiche 11, bevorzugt ist jeder der Speichen 11 jeweils ein derartiges Luftförderelement 12 zugeordnet (nicht gezeigt). Das Luftförderelement 12 ist vorzugsweise mit einer geringen Wandstärke von höchstens 15 mm, höchstens 10 mm, höchstens 7,5 mm, höchstens 5 mm oder weniger ausgeführt. Insbesondere weist das Luftförderelement 12 eine Wandstärke von höchstens 2,5 mm, höchstens 2 mm, höchstens 1,5 mm oder höchstens 1 mm auf.

Das Oberflächenvergrößerungselement 13 erstreckt sich ausgehend von der Speiche 11 beziehungsweise den Speichen 11 in axialer Richtung in Richtung des Innenhorns 7. Liegen - wie hier - mehrere Oberflächenvergrößerungselemente 13 vor, so sind sie in radialer Richtung voneinander beabstandet angeordnet. Beispielsweise weisen sie ausgehend von der Felgenmitte 3 jeweils dieselbe Erstreckung in axialer Richtung auf. Sie können in axialer Richtung gegeneinander versetzt angeordnet sein, beispielsweise aufgrund eines Versatzes und/oder einer Krümmung der Felgenmitte 3. Das Oberflächenvergrößerungselement 13 verläuft in Umfangsrichtung entlang einer Kreislinie. Besonders bevorzugt ist das Oberflächenvergrößerungselement 13 insgesamt kreisförmig beziehungsweise kreisringförmig. Es liegt insoweit als Hohlkreiszylinder vor, welcher mit einer ersten Stirnseite an der Felgenmitte 3 angeordnet ist und an seiner zweiten Stirnseite ein freies Ende aufweist.

Die beschrieben Ausgestaltung der Kraftwagenfelge 1 realisiert eine äußerst filigrane Optik und stellt gleichzeitig aufgrund des Herstellens der Kraftwagenfelge 1 durch das Druckgießen eine kostengünstige und schnelle Herstellung der Kraftwagenfelge 1 sicher. Zudem werden mittels des Druckgießens des Aluminiums oder der Aluminiumlegierung hervorragende Festigkeitswerte erzielt und aufgrund des Luftförderelements 12 und/oder des Oberflächenvergrößerungselements 13 eine effektive Abfuhr von Wärme von der Kraftwagenfelge 1 sichergestellt.

### BEZUGSZEICHENLISTE:

- 1: Kraftwagenfelge
- 2: Felgenbett
- 3: Felgenmitte
- 4: Nabe
- 5: Längsmittelachse
- 6: Außenhorn
- 7: Innenhorn
- 8: Mittenausnehmung
- 9: Lochkreis
- 10: Bohrung
- 11: Speiche
- 12: Luftförderelement
- 13: Oberflächenvergrößerungselement
- 14: Pfeil

## Patentansprüche

1. Verfahren zum Herstellen einer Kraftwagenfelge (1) aus Aluminium oder einer Aluminiumlegierung für ein Rad eines Kraftfahrzeugs, wobei die Kraftwagenfelge (1) ein auf gegenüberliegenden Seiten von einem Außenhorn (6) und einem Innenhorn (7) begrenztes Felgenbett (2), eine Nabe (4) mit einer Mittenausnehmung (8) und einem Lochkreis (9) sowie eine das Felgenbett (2) und die Nabe (4) miteinander verbindende Felgenmitte (3) aufweist, **dadurch gekennzeichnet, dass** die Kraftwagenfelge (1) einstückig und durchgehend in einer Gießform durch Druckgießen eines Gießmaterials hergestellt wird, wobei bei dem Druckgießen an der Kraftwagenfelge (1) von der Felgenmitte (3) ausgehend felgeninnenseitig wenigstens ein zur Förderung von Luft in bezüglich einer Längsmittelachse (5) der Kraftwagenfelge (1) axialer Richtung gegenüber einer senkrecht auf der Längsmittelachse (5) stehenden gedachten Ebene angestelltes Luftförderelement (12) und/oder wenigstens ein in Umfangsrichtung entlang einer Kreislinie verlaufendes Oberflächenvergrößerungselement (13) ausgebildet wird.

2. Verfahren nach Anspruch 1, **dadurch gekennzeichnet, dass** die Kraftwagenfelge
- wenigstens bereichsweise eine geringe Wandstärke von höchstens 15 mm aufweist, und/oder
- eine Krümmung mit einem geringen Krümmungsradius von höchstens 4 mm aufweist, und/oder
- eine in axialer Richtung und in radialer Richtung und/oder in axialer Richtung und in tangentialer Richtung bezüglich der Längsmittelachse (5) der Kraftwagenfelge (1) verlaufende Entformungsfläche aufweist, die vollständig in einer gedachten Ebene liegt, wobei die Ebene mit der Längsmittelachse einen Winkel einschließt, der mehr als 0° und höchstens 4° beträgt.

3. Verfahren nach einem der vorhergehenden Ansprüche, **dadurch gekennzeichnet, dass** die Felgenmitte (3) mit mehreren in Umfangsrichtung bezüglich der Längsmittelachse (5) der Kraftwagenfelge (1) voneinander beabstandeten Speichen (11) ausgebildet wird.

4. Verfahren nach einem der vorhergehenden Ansprüche, **dadurch gekennzeichnet, dass** das Oberflächenvergrößerungselement (13) von dem Luftförderelement (12) ausgehend ausgebildet wird.

5. Verfahren nach einem der vorhergehenden Ansprüche, **dadurch gekennzeichnet, dass** das Luftförderelement (12) sich in radialer Richtung bezüglich der Längsmittelachse (5) von der Nabe (4) bis zu dem Felgenbett (2) erstreckend ausgebildet wird.

6. Verfahren nach einem der vorhergehenden Ansprüche, **dadurch gekennzeichnet, dass** das Luftförderelement (12) im Längsschnitt gesehen mit einer Erstreckung in axialer Richtung ausgebildet wird, die höchstens einer Erstreckung der Felgenmitte (3) in derselben Richtung entspricht oder höchstens um 50 % größer ist als diese.

7. Verfahren nach einem der vorhergehenden Ansprüche, **dadurch gekennzeichnet, dass** die bei dem Druckgießen verwendete Gießform Bestandteil eines Druckgießwerkzeugs ist und das Gießmaterial durch wenigstens eine Einspritzöffnung in die Gießform eingebracht wird.

8. Kraftwagenfelge (1) aus Aluminium oder einer Aluminiumlegierung für ein Rad eines Kraftfahrzeugs, hergestellt nach einem oder mehreren der vorhergehenden Ansprüche, wobei die Kraftwagenfelge (1) ein auf gegenüberliegenden Seiten von einem Außenhorn (6) und einem Innenhorn (7) begrenztes Felgenbett (2), eine Nabe (4) mit einer Mittenausnehmung (8) und einem Lochkreis (9) sowie eine das Felgenbett (2) und die Nabe (4) miteinander verbindende Felgenmitte (3) aufweist, **dadurch gekennzeichnet, dass** die Kraftwagenfelge (1) einstückig und durchgehend in einer Gießform durch Druckgießen eines Gießmaterials hergestellt ist, wobei die Kraftwagenfelge (1) von der Felgenmitte (3) ausgehend felgeninnenseitig wenigstens ein zur Förderung von Luft in bezüglich einer Längsmittelachse (5) der Kraftwagenfelge axialer Richtung gegenüber einer senkrecht auf der Längsmittelachse (5) stehenden gedachten Ebene angestelltes Luftförderelement und/oder wenigstens ein in Umfangsrichtung entlang einer Kreislinie verlaufendes Oberflächenvergrößerungselement (13) aufweist, dass bei dem Druckgießen ausgebildet ist.

## Claims

1. Method for producing a motor vehicle rim (1) made of aluminum or an aluminum alloy for a wheel of a motor vehicle, wherein the motor vehicle rim (1) has a rim well (2) delimited on opposite sides by an outer horn (6) and an inner horn (7), a hub (4) with a central recess (8) and a bolt circle (9), and a rim center (3) connecting the rim well (2) and the hub (4) to one another, **characterized in that** the motor vehicle rim (1) is produced in one piece and continuously in a casting mold by die casting of a casting material, wherein during the die casting at the motor vehicle rim (1), starting from the rim center (3), on the inside of the rim, at least one air conveying element (12) installed for conveying air in the axial direction with respect to a longitudinal central axis (5) of the motor vehicle rim (1) relative to an imaginary plane perpendicular to the longitudinal central axis (5) and/or at least one surface enlargement element (13) extending in the circumferential direction along a circular line is formed.

2. Method according to claim 1, **characterized in that** the motor vehicle rim
- has at least in some areas a low wall thickness of at most 15 mm, and/or
- has a curvature with a low curvature radius of at most 4 mm, and/or
- has a demolding surface which extends in the axial direction and in the radial direction and/or in the axial direction and in the tangential direction relative to the longitudinal central axis (5) of the motor vehicle rim (1), and which lies completely in an imaginary plane, wherein the plane subtends with the longitudinal central axis an angle which is more than 0° and at most 4°.

3. Method according to any one of the preceding claims, **characterized in that** the rim center (3) is formed with a plurality of spokes (11) spaced apart in the circumferential direction relative to the longitudinal central axis (5) of the motor vehicle rim (1).

4. Method according to any one of the preceding claims, **characterized in that** the surface enlargement element (13) is formed starting from the air conveying element (12).

5. Method according to any one of the preceding claims, **characterized in that** the air conveying element (12) is formed extending in the radial direction relative to the longitudinal central axis (5) from the hub (4) to the rim well (2).

6. Method according to any one of the preceding claims, **characterized in that** the air conveying element (12) is formed, viewed in longitudinal section, with a maximum extension in the axial direction which is equal to an extension of the rim center (3) in the same direction or is at most 50% greater than the latter.

7. Method according to any one of the preceding claims, **characterized in that** the casting mold used in the die casting is part of a die-casting die and the casting material is introduced into the casting mold through at least one injection opening.

8. Motor vehicle rim (1) made of aluminum or an aluminum alloy for a wheel of a motor vehicle, produced according to one or more of the preceding claims, wherein the motor vehicle rim (1) has a rim well (2) delimited on opposite sides by an outer horn (6) and an inner horn (7), a hub (4) with a central recess (8) and a bolt circle (9), and a rim center (3) connecting the rim well (2) and the hub (4) to one another, **characterized in that** the motor vehicle rim (1) is produced in one piece and continuously in a casting mold by die casting of a casting material, wherein the motor vehicle rim (1) has, starting from the rim center (3), on the inside of the rim, at least one air conveying element installed for conveying air in the axial direction with respect to a longitudinal central axis (5) of the motor vehicle rim relative to an imaginary plane perpendicular to the longitudinal central axis (5) and/or at least one surface enlargement element (13) which extends in the circumferential direction along a circular line and which is formed during the die casting.

## Revendications

1. Procédé de fabrication d'une jante pour véhicule automobile (1) en aluminium ou en alliage d'aluminium pour une roue d'un véhicule automobile, dans lequel la jante pour véhicule automobile (1) présente une embase de jante (2) délimitée sur des côtés opposés par un cornet extérieur (6) et un cornet intérieur (7), un moyeu (4) avec un évidement central (8) et un cercle de perçage (9) ainsi qu'un centre de jante (3) reliant l'embase de jante (2) et le moyeu (4) l'un à l'autre, **caractérisé en ce que** la jante pour véhicule automobile (1) est fabriquée d'un seul tenant et en continu dans un moule par coulage par coulée sous pression d'un matériau de coulée, dans lequel, lors de la coulée sous pression, au moins un élément de transport d'air (12) disposé pour transporter de l'air en direction axiale par rapport à un axe central longitudinal (5) de la jante pour véhicule automobile (1) par rapport à un plan imaginaire perpendiculaire à l'axe central longitudinal (5) et/ou au moins un élément d'agrandissement de surface (13) s'étendant en direction circonférentielle le long d'une ligne circulaire est formé sur la jante pour véhicule automobile (1) à partir du centre de jante (3) du côté intérieur de la jante.

2. Procédé selon la revendication 1, **caractérisé en ce que** la jante pour véhicule automobile
- présente au moins par endroits une épaisseur de paroi faible d'au plus 15 mm, et/ou
- présente une courbure avec un rayon de courbure faible d'au plus 4 mm, et/ou
- présente une surface de déformation s'étendant en direction radiale et/ou en direction axiale et en direction tangentielle par rapport à un axe central longitudinal (5) de la jante pour véhicule automobile (1), surface qui se trouve entièrement dans un plan imaginaire, dans lequel le plan forme avec l'axe central longitudinal un angle qui s'élève à plus de 0° et au plus à 4°.

3. Procédé selon l'une quelconque des revendications précédentes, **caractérisé en ce que** le centre de jante (3) est réalisé avec plusieurs rayons (11) espacés les uns des autres en direction circonférentielle par rapport à l'axe central longitudinal (5) de la jante pour véhicule automobile (1).

4. Procédé selon l'une quelconque des revendications précédentes, **caractérisé en ce que** l'élément d'agrandissement de surface (13) est formé à partir de l'élément de transport d'air (12).

5. Procédé selon l'une quelconque des revendications précédentes, **caractérisé en ce que** l'élément de transport d'air (12) est réalisé en s'étendant en direction radiale par rapport à l'axe central longitudinal (5) à partir du moyeu (4) jusqu'à l'embase de jante (2).

6. Procédé selon l'une quelconque des revendications précédentes, **caractérisé en ce que** l'élément de transport d'air (12), vu en section longitudinale, est conçu avec une extension en direction axiale qui correspond au plus à une extension du centre de jante (3) dans la même direction ou est supérieure au plus de 50 % à celle-ci.

7. Procédé selon l'une quelconque des revendications précédentes, **caractérisé en ce que** le moule utilisé pour le coulage sous pression fait partie d'un outil de coulée sous pression et **en ce que** le matériau de coulée est introduit dans le moule à travers au moins une ouverture d'injection.

8. Jante pour véhicule automobile (1) en aluminium ou en alliage d'aluminium pour une roue d'un véhicule automobile, fabriquée selon une ou plusieurs des revendications précédentes, dans lequel la jante pour véhicule automobile (1) présente une embase de jante (2) délimitée sur des côtés opposés par un cornet extérieur (6) et un cornet intérieur (7), un moyeu (4) avec un évidement central (8) et un cercle de perçage (9) ainsi qu'un centre de jante (3) reliant l'embase de jante (2) et le moyeu (4) l'un à l'autre, **caractérisé en ce que** la jante pour véhicule automobile (1) est fabriquée d'un seul tenant et en continu dans un moule par coulage par coulée sous pression d'un matériau de coulée, dans lequel la jante pour véhicule automobile (1) présente au moins un élément de transport d'air disposé pour transporter de l'air en direction axiale par rapport à un axe central longitudinal (5) de la jante pour véhicule automobile par rapport à un plan imaginaire perpendiculaire à l'axe central longitudinal (5) et/ou au moins un élément d'agrandissement de surface (13) s'étendant en direction circonférentielle le long d'une ligne circulaire qui est formé lors de la coulée sous pression.
